Europäisches Patentamt

European Patent Office

Office européen des brevets

(19)

(11) Veröffentlichungsnummer: **0 141 288**
**B1**

# (12) EUROPÄISCHE PATENTSCHRIFT

(45) Veröffentlichungstag der Patentschrift:
06.04.88

(21) Anmeldenummer: **84111938.1**

(22) Anmeldetag: **05.10.84**

(51) Int. Cl.⁴: **C 03 B 9/38, C 03 B 9/353**

(54) **Formwerkzeug für eine Maschine zur Verarbeitung schmelzflüssigen Glases zu Hohlglasartikeln.**

(30) Priorität: **07.10.83 DE 3336488**

(43) Veröffentlichungstag der Anmeldung:
**15.05.85 Patentblatt 85/20**

(45) Bekanntmachung des Hinweises auf die Patenterteilung:
**06.04.88 Patentblatt 88/14**

(84) Benannte Vertragsstaaten:
**AT BE CH FR GB IT LI LU NL SE**

(56) Entgegenhaltungen:
**EP-A-0 112 083
FR-A-2 103 648
FR-A-2 346 294**

(73) Patentinhaber: **EMHART ZÜRICH S.A.,
Seefeldstrasse 224, Zürich (CH)**

(72) Erfinder: **Knoth, Werner- Dieter, Byfangerstrasse
175, D-4300 Essen 15 (DE)**
Erfinder: **Hüllen, Helmut, Dreilindenstrasse 93,
D-4300 Essen 1 (DE)**
Erfinder: **Höfig, Gerhard, Am Wertschemm 9,
D-4300 Essen 12 (DE)**
Erfinder: **Nebelung, Hermann, Dipl.- Ing., Basler
Strasse 29, CH- 8048 Zürich (CH)**

(74) Vertreter: **Drury, Peter Lawrence, Emhart Patents
Department Lyn House 39 The Parade, Oadby,
Leicester LE2 5BB (GB)**

## Beschreibung

Die Erfindung betrifft eine Einrichtung zur Kühlung der Vorformen einer IS- oder RIS-Maschine, wobei die Formsegmente mit axialen Kühlkanälen in Form von Durchbrechungen, Bohrungen od dgl. zur Führung eines Kühlmittels, vorzugsweise Luft, ausgerüstet sind, die an ihren oberen Enden in waagerechte Verteilerkanäle einmünden, wobei die Verteilerkanäle eines jeden Formsegments mit einem Versorgungskanal in Verbindung stehen.

Das Formwerkzeug findet bevorzugt Anwendung auf sog. IS- und RIS-Maschinen. Dies sind bekannte Hohlglas-Produktionseinrichtungen, bei denen einzelne, untereinander gleiche Produktionsstationen synchronisiert den Produktionsprozeß vollziehen. Der zweistufige Produktionsprozeß besteht aus einer Vorform- und einer Fertigformstufe. In jeder dieser Stufen werden die Glasposten in Vor- bzw. Fertigform durch Pressen oder Blasen in eine gewünschte Gestalt gebracht. Bei einer IS-Maschine ist die Anzahl der Fertigform gleich der der Vorformen, während bei einer RIS-Maschine die Zahl der Fertigformen mindestens doppelt so groß ist wie die Zahl der Vorformen. Zur Vermeidung von Überhitzungen ist es bekannt, die Formen zu kühlen. Der Gegenstand der Erfindung bezieht sich bevorugt auf eine Kühltechnologie für die Vorformen.

Zur Erzielung eines qualitativ hochwertigen Glasbehälters ist ein Fließen des viskosen Glases bei seiner Volumenvergrösserung durch Aufpressen oder Aufblasen in bestimmte Richtungen und Mengen in gesteuerter Form unerläßliche Voraussetzung. Dies wird durch eine nach Zeit und Ort unterschiedliche Wärmeabfuhr aus den metallischen Formen erreicht, die dadurch unterschiedliche Temperaturen auf der Kontaktoberfläche zum Glas annehmen.

Um diese Wärmeableitung durchzuführen, ist eine Vielzahl technischer Lösungen bekanntgeworden. So ist beispielsweise das offene seitliche Anblasen der Formen eine der gebräuchlichsten Methoden. Hierbei erweist sich jedoch vor allen der schlechte thermische Wirkungsgrad, die erhebliche Lärmentwicklung und die nur äußerst schwierig zu verwirklichende Steuerung der Abkühlungsvorgänge nach Ort und Zeit als sehr nachteilig. Eine Verbesserung gegenüber diesenen offenen Systemen stellen die sog. geschlossenen Kühlsysteme dar, wie sie beispielsweise durch die US-A-3 499 746, US-A-1 798 136 und die DE-B-1 205 235 bekannt sind. Entscheidend für eine gute Funktion eines derartigen Kühlsystems ist, daß etwa Rotationssymmetrie zur Mittelachse der Form in ein, zwei oder mehr Ebenen besteht, je nach der Gestalt des herzustellenden Glasbehälters. Durch Längskanäle, z. B. in Form von Bohrungen, ist das Kühlmittel geführt. Strömungsrichtung und Strömungsverteilung sind je nach der gewählten technischen Problemlösung unterschiedlich. Durch die DE-C 25 37 037 ist ein Kühlsystem bekannt, bei dem die axialen Durchbrüche vollständig in einer Axialebene zur Formenachse verlaufen. In einer weiteren Ausführung nach der DE-C-30 40 310 wird wiederum von einer vollständigen Längsdurchfühgrung der Durchbrechnungen durch die Form ausgegangen, wobei das Kühlmittel von unten her zugeführt wird. Die Kühlmittelzufuhr erfolgt dabei derart, daß außerhalb der Formsegmente, z. B. Formenhälften, ein Verteilerkasten angeordnet ist. Aus vielen Auslaßöffnungen der beiden vorgesehenen Verteilerkästen tritt das Kühlmittel in die diesen zugeordneten Einlaßöffnungen in den jeweiligen Formehälften ein. Weitere Ausführungsbeispiele von Vorformkühlungen sind bekannt durch die DE-A-30 40 311 sowie DE-C-30 40 356. Auch bei diesen bekannten Ausführungen strömt das Kühlmittel von unten in die Vorformen über wiederum außerhalb der Vorformen liegende Verteilerkästen über eine Vielzahl von miteinander korrespondierenden Einlaß- und Auslaßöffnungen. Diesen bekannten Ausführungen ist sämtlich der Nachteil der aufwendigen Verteilerkästen für das Kühlmittel zu eigen. Über zahlreiche Auslaßkanäle, die mit entsprechenden Einlaßkanälen der Formsegmente korrespondieren, findet eine Strömung nur dann steuerbar und richtig verlaufend statt, wenn die Dichtung zwischen Formenhalter und Formenkasten einerseits und den Formsegmenten andererseits vollständig ist. Diese Dichtigkeit ist aber bei herrschenden, vergleichsweise hohen Temperaturen und dem dadurch bedingten Verzug der Formsegmente wenn überhaupt, dann nur mit größten Schwierigkeiten erreichbar. Darüber hinaus wird bei höheren Bewegungsgeschwindigkeiten für das Öffnen und Schließen der Formen im Hochleistungsbereich der Glasherstellung, in dem sich also auch Formenhalter und Formenkühlmittelkasten mitbewegen müssen, der Einfluß der bewegten Massen immer größer.

Von diesem Stand der Technik ausgehend liegt der Erfindung die Augabe zugrunde, unter Vermeidung vorerwähnter Nachteile, ein Formwerkzeug der eingangs genannten Art zu schaffen, dessen Kühlmittelverteilsystem nicht nur in einfacher Weise ausgebildet und zu steuern ist, sondern auch über eine hohe Dichtigkeit verfügt sowie eine Steigerung der Produktionsgeschwindigkeit ermöglicht.

Diese Aufgabe begründet sich u.a. darauf, daß das Bestreben dahingeht, die IS-Behälterglasproduktionsmaschinen immer leistungsfähiger zu machen, d.h., daß die erzeugte Stückzahl pro Zeiteinheit weiter ansteigt. Da die wärmetechnischen Grundeigenschaften der verwendeten Werkstoffe und Bauteile, wie Wärmeleitfähigkeit und Wärmeübergang, die gleichen bleiben, muß zur Abführung der bei höheren Produktionsgeschwindigkeiten auftretenden höheren Wärmemengen ein leistungsfähigeres Kühlsystem eingesetzt werden. Dies betrifft die Vorformseite der IS-Maschine, obwohl bei diesem Maschinentyp der thermische Engpaß, also die Stelle, deren Wärmeabfuhrgeschwindigkeit die max. mögliche Produktionsgeschwindigkeit bestimmt, die Fertigformseite ist. Für den Gesamtprozeß, nämlich auch die Ausformung des Külbels auf der Fertigformseite mit einer optimalen Glaswanddickenverteilung, ist eine richtige Vorformkühlung mit entscheidend. In weit höherem Maße gilt dies für die Kühlung der Vorformseite einer RIS-Maschine. Zwar anders geartet als bei der IS-Maschine liegt bei diesem Maschinentyp der thermische Engpaß auf der Vorformseite. Bei der bei diesem Maschinentyp verwendeten Technologie finden in Anlehnung an die IS-Maschine in einer Reihe angeordnete Produktionsstationen Verwendung, wobei in jeder einzelnen Station doppelt oder mehrfach so viele Fertigformen verwendet werden wie Vorformen. Der technisch Engpaß wird dadurch aber die Vorformseite, weil genug Fertigformen zur Wärmeabfuhr vorhanden sind. Aus diesem RIS-Prinzip folgt aber auch, daß die Produktionsgeschwindigkeit wegen mehrerer Formen auf der Fertigformseite durchaus weiter ansteigen kann. Aus dieser doppelten Notwendigkeit, nämlich einmal Verlagerung des thermischen Engpasses auf der Vorformseite und zum anderen sprungartig mögliche Steigerung der Produktionsgeschwindigkeit infolge mehrerer Formen auf der Fertigformseite, ergibt sich die gegenüber einer IS-Maschine noch höhere Dringlichkeit für eine einwandfreie Lösung eines betrieblich gut zu handhabenden und in seinen physikalischen Wirkungen, wie Wärmeabfuhr, Dichtigkeit, Haltbarkeit und Verzugsfreiheit, brauchbare Kühlmittelverteilsystems.

Zur Lösung dieser Aufgabe werden die im Hauptanspruch enthaltenen Merkmale vorgeschlagen. Durch diese Ausgestaltung erfolgt die Zufuhr des Kühlmittels durch den Bewegungsmechanismus sowie den Formenhalter ohne Zwischenbehälter oder Verteiler direkt in die Formsegmente, und zwar über einen einzigen Anschlußkanal pro Formsegment. Auf diese Weise werden für den praktischen Betrieb wesentliche Verbesserungen gegenüber den Ausführungen nach dem Stand der Technik erreicht. Die Kühlmittelzufuhr wird in einfacher Weise durch den immer vorhandenen Trag- und Haltemechanismus geführt. Damit entfällt jeglicher zusätzlicher Kühlmittelleitungsaufwand bzw. Kammern- und Verteilbehälter. Durch die Ankopplung der Formsegmente an jeweils nur eine Zufuhröffnung entfallen die Dichtungsprobleme, da lediglich am Anschluß zwischen Formenhalter und Formsegment ein Dichtungsmittel vorhanden sein muß. Dadurch werden erhebliche Leckverluste an Kühlmittel und das Auftreten unkontrollierbarer Kühlmittelveränderungen vermieden, die bei Anbringung von mehreren oder vielen Öffnungen mit vielen Dichtflächen immer vorhanden sind. Die Verteilung des Kühlmittels erfolgt innerhalb der Vorformsegmente. Der in dem Anschlußkanal vorgesehene unter der Einwirkung einer Feder stehende Rohrstutzen bewirkt über eine Dichtung den Anschluß zwischen Formsegment einerseits und Formenhalterung andererseits. Die nicht vollständige Durchbrechung der Vorform zum Führen des Kühlmittelstromes berücksichtigt die Kenntnis, daß gerade der Boden des Külbels heiß bleiben muß. Nach dem Umkehren des Külbels und Einsetzen in die Fertigform wird durch Ausblasen des Külbelbodens der Hauptanteil des Fertigformverformungsvorganges eingeleitet. Ist der Boden durch Kühlung in der Vorform zu kalt, so treten erhebliche Formgebungshemmungen in der Fertigform auf. Aus diesem Grunde wird in Weiterentwicklung der Erfindung der Bodenbereich der Külbel von der Kühlung ganz ausgenommen oder aber nur teilweise gekühlt.

Die EP-A2-0 112 083, welche unter Artikel 54 (3) EPÜ fällt, hat ein Formwerkzeug für eine Maschine zur Verarbeitung schmelzflüssigen Glases zu Hohlglasartikeln zum Gegenstand, dessen Formsegmente mit axialen Kühlkanälen zur Führung eines Kühlmittels, vorzugsweise Luft, ausgerüstet sind, die an ihren oberen Enden in waagerechte Verteilerkanäle einmünden. Die Verteilerkanäle eines jeden Formsegments stehen mit einem Versorgungskanal in Verbindung. Jedes Formsegment weist eine mit dem Versorgungskanal verbundene Eintrittsöffnung auf, welcher in einer Halterung des Formsegments eine Austrittsöffnung eines Anschlußkanals zugeordnet ist, der über einen Kanal in der Halterung mit dem Gelenk der Formensegmenthalterschale verbunden ist, welche über Kanäle im Bewegungsmechanismus zum Öffnen und Schließen der Formsegmente an einen Zuführungskanal in dessen Hauptschwenkachse angeschlossen sind. In den Anschlußkanälen befinden sich, unter der Einwirkung von Federn, stehende Rohrstutzen.

Vorteilhaft sind die Verteil- und Versorgungskanäle von Bohrungen gebildet, die an ihren einen Enden mittels Schraubbolzen verschlossen sind. Auf diese Weise ergibt sich eine herstellungstechnisch besonders günstige Ausführung für diese Kanäle.

Die Kühlkanäle sind in Ebenen angeordnet, die gegenüber der Formenlängsachse geringfügig verdreht sind, d.h. diese Kanäle verlaufen nicht parallel zur Formenlängsachse. Dies hat den Vorteil der Vermeidung jeglicher vertikaler Streifenbildungen in den Temperaturfeldern der Formsegmente. Die Schrägstellung durch Verdrehen der Kühlkanäle vergleichmäßigt damit sowohl die Axial- als auch Raumtemperaturfelder und damit die Glasverteilung insgesamt.

Die Kühlkanäle sind an ihren unteren Enden mit Gewinden versehen, in die Schraubventile od.dgl. einschraubbar sind. Auf diese Weise läßt sich eine optimale Temperaturverteilung in einfacher Weise erreichen.

Die Kühlkanäle münden in eine Ringnut ein, welche mit Zwischenräumen zwischen Rippen des Mündungsformteils des Formwerkzeuges in Verbindung stehen. Mit dem gleichen Kühlmittelstrom wird somit nach Umspülen des Vorformbereiches auch der Mündungsteil der Vorform mitgekühlt, bevor der Kühlmittelstrom ins Freie entweichen kann.

Ein Ausführungsbeispiel der Erfindung ist an Hand der Zeichnung näher erläutert, und zwar zeigt:

Figur 1 eine Draufsicht von Vorformsegmenten für Doppeltropfen einer Station einer IS- und RIS-Maschine und

Figur 2 einen senkrechten Schnitt durch ein Vorform- und Mündungsformsegment.

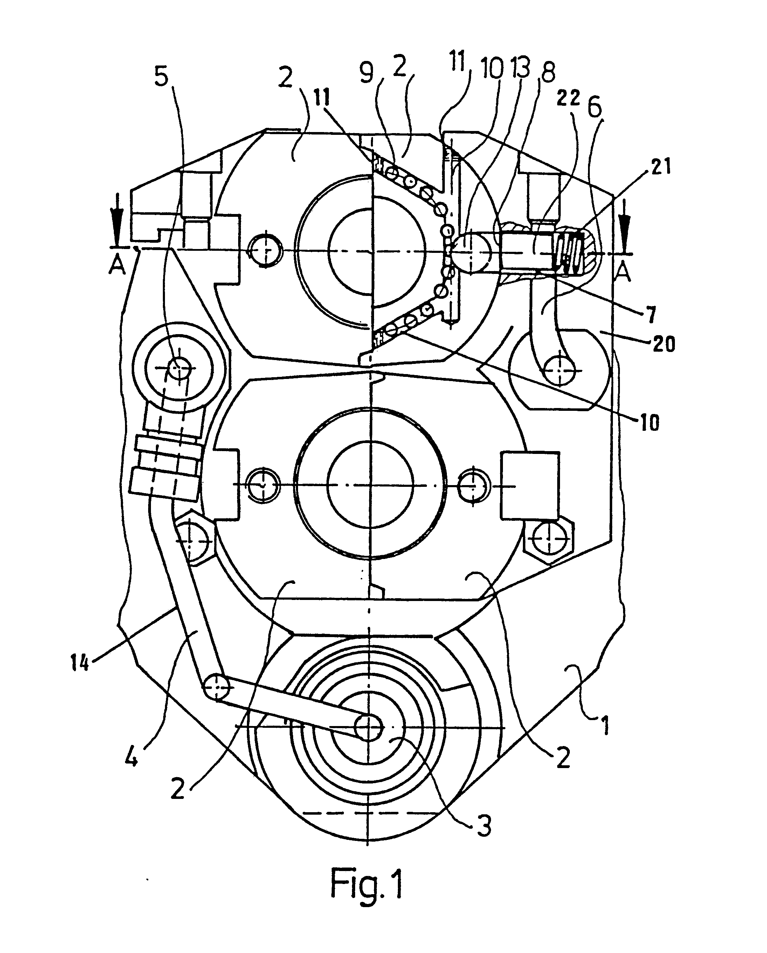

Im einzelnen zeigt Figur 1 einen Horizontalschnitt für die Kühlmittelzufuhr aus dem feststehenden Stationsrahmen 1 einer Produktionsstation der hier beispielsweise gezeichneten vier horizontal schwenkbaren Formsegmente 2. Der Übersichtlichkeit halber und wegen der vorhandenen Symmetrie ist die Kühlmittelverbindung von der Hauptschwenkachse 3 bis zum Gelenk der Formenhalterschale 5 auf der linken Seite der Figur dargestellt, während die Fortsetzung des Kühlmittelstromes vom Gelenk der Formenhalterschale 5 bis in die Formsegmente 2 selbst auf der rechten Seite der Figur 1 dargestellt ist.

Die Kühlmittelzufuhr erfolgt über eine Bohrung in der Hauptschwenkachse 3. Aus dieser strömt das Kühlmittel über Schraubanschlüsse und Kanäle 4, die sich innerhalb des Bewegungsmechanismus 14 zum Öffnen und Schließen der Formsegmente 2 befinden, bis hin zu den Gelenken der Formenhalterschalen 5. Von diesen gelangt der Kühlmittelstrom über weitere Kanäle 6 in den Halterungen 20 der Formsegmente 2 bis hin in die Anschlußkanäle 7. In den Anschlußkanälen 7 befinden sich unter der Einwirkung von Federn 21 stehende Rohrstutzen 22, die unter der Wirkung ihrer Federn 21 und Vermittlung eines nicht weiter dargestellten Dichtungselementes dicht an den Formsegmenten 2 anliegen. Das freie Ende des Rohrstutzens 22 stellt die Austrittsöffnung der Halterung 20 der Formsegmente 2 dar und umgibt die Eintrittsöffnung 8 des zugehörigen Formensegments 2. Für jedes Formsegment 2 ist nur jeweils eine Eintrittsöffnung 8 vorhanden, welcher jeweils nur eine Austrittsöffnung im Rohrstutzen 22 der Formenhalterung 20 zugeordnet ist.

Die Verteilung des Kühlmittels erfolgt innerhalb der Formsegmente 2 selbst. Somit wird dort ein größeres Wärmevolumen an das Kühlmittel abgeführt, wegen einer grösseren vorhandenen Oberfläche durch die verschiedenen Kühlkanäle des Verteilersystems.

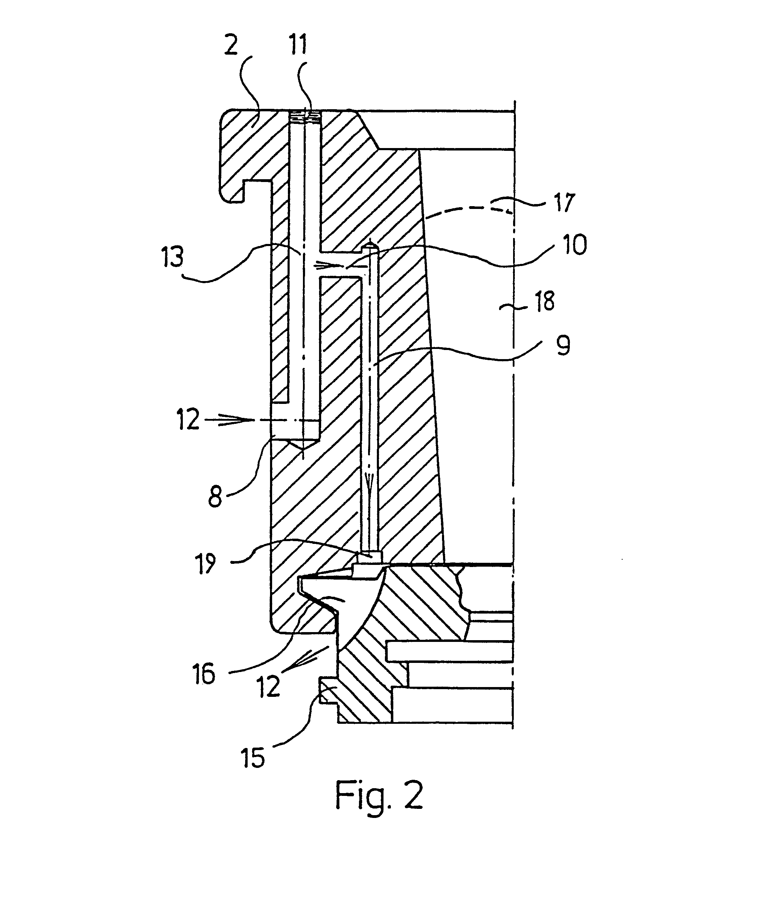

Wie insbesondere aus Figur 2 ersichtlich, tritt das Kühlmittel in die Eintrittsöffnung 8 eines jeden Formsegments 2 ein, wie durch den Pfeil 12 deutlich gemacht ist. Von den Eintrittsöffnungen 8 gelangt das Kühlmittel in die senkrechten Versorgungskanäle 13 und von diesen in die horizontalen Verteilerkanäle 10. Diese Kanäle 10, 13 sind, wie insbesondere aus Figur 1, rechte Hälfte oben, ersichtlich, von außen gebohrt und durch Schraubbolzen 11 einendig verschlossen. Aus diesen horizontalen Verteilerkanälen 10 gelangt das Kühlmittel in die eigentlichen axialen Kühlkanäle 9.

Die Kühlkanäle 9 sind als Sackbohrungen ausgeführt, so daß eine Vollständige Durchbrechung der Vorform vermieden wird. Die Höhe der in die Kühlkanäle 9 einmündenden Verteilerkanäle 10 ist so bemessen, daß die Böden 17 der Külbel 18 sich genügend weit oberhalb der waagerechten Verteilerkanäle 10 befinden und damit deutlich weniger gekühlt werden als die neben den Kühlkanälen 9 liegenden Bereiche der Vorformen.

Aus den ringförmig oder in anderer Form, z. B. sechseckig, zur Hauptformenachse angebrachten Kühlkanäle 9 strömt das Kühlmittel in eine Ringnut 19. Von dort gelangt das Kühlmittel in Zwischenräume zwischen den Rippen 16 des Mündungsformteils 15, bewirkt dort eine weitere Külhlung und strömt dann ins Freie ab.

**Patentansprüche**

1. Einrichtung zur Kühlung der Vorformen einer IS- oder RIS-Maschine, wobei die Formsegmente (2) mit axialen Kühlkanälen (9) zur Führung eines Kühlmittels, vorzugsweise Luft, ausgerüstet sind, die an ihren oberen Enden in waagerechte Verteilerkanäle (10) einmünden, wobei die Verteilerkanäle (10) eines jeden Formsegments (2) mit einem Versorgungskanal (13) in Verbindung stehen und jedes Formsegment (2) eine mit dem Versorgungskanal (13) verbundene Eintrittsöffnung (8) aufweist, welcher in einer Halterung (20) des Formsegments (2) eine Austrittsöffnung eines Anschlußkanals (7) zugeordnet ist, der über einen Kanal (6) in der Halterung (20) mit dem Gelenk der Formsegmenthalterschale (5) verbunden ist, welche über Kanäle (4) im Bewegungsmechanismus (14) zum Öffnen und Schließen der Formsegmente (2) an einen Zuführungskanal in dessen Hauptschwenkachse (3) angeschlossen sind und sich in dem Anschlußkanal (7) ein unter der Einwirkung einer Feder (21) stehender Rohrstutzen (22) befindet, wobei die Verteilerkanäle (10) in den Formsegmenten (2) in bezug auf deren Höhe derart angeordnet sind, daß die Böden (17) der im Formwerkzeug ausgeformten Külbel (18) sich deutlich oberhalb der waagerechten Verteilerkanäle (10) befinden.

2. Einrichtung nach Anspruch 1, dadurch gekennzeichnet, daß die Verteiler- und Versorgungskanäle (10, 13) von Bohrungen gebildet sind, die an ihren einen Enden mittels Schraubbolzen (11) verschlossen sind. .

3. Einrichtung nach Anspruch 1 oder 2, dadurch gekennzeichnet, daß die Kühlkanäle (9) in Ebenen angeordnet sind, die gegenüber der Formenlängsachse geringfügig verdreht sind.

4. Einrichtung nach Anspruch 1 oder einem der vorhergehenden, dadurch gekennzeichnet, daß die Kühlkanäle (9) an ihren unteren Enden mit Gewinde versehen sind, in die Schraubventile od.dgl. einschraubbar sind.

5. Einrichtung nach Anspruch 1 oder einem der vorhergehenden, dadurch gekennzeichnet, daß die Kühlkanäle (9) in eine Ringnut (19) einmünden, welche mit Zwischenräumen zwischen den Rippen (16) des Mündungsformteils (15) in Verbindung stehen.

## Claims

1. System for cooling parison moulds of an IS or RIS machine, wherein the mould segments (2) are provided with axial cooling channels (9) for conducting a coolant, preferably air, which extend at their upper ends into horizontal distributor channels (10), wherein the distributor channels (10) of each mould segment (2) are connected with a supply channel (13), and each mould segment (2) has an inlet port (8) connected to the supply channel (13), to which is attached an outlet port of a connecting channel (7) in a mounting support (20) of the mould segment (2), which is connected via a channel (6) in the mounting support (20) with the joint of the mould segment support shell (5), which via channels (4) within the operating mechanism (14) are connected with a feed channel inside its principle swivel axis (3) for the opening and closing of the mould segments (2) and inside the connecting channel (7) there is a pipe connection (22) exposed to the action of a spring (21), wherein the distributor channels (10) within the mould segments (2) are arranged with regard to their height such that the bottoms (17) of the parisons (18) formed in the moulding tool are distinctly above the horizontal distributor channels (10).

2. System according to claim 1, further characterised in that the distributor and supply channels (10, 13) are formed by drill holes, which are sealed off at one of their ends by means of screw bolts (11).

3. System according to claim 1 or 2, further characterised in that the cooling channels (9) are arranged in planes, which are slightly staggered in relation to the longitudinal axis of the moulds.

4. System according to claim 1 or any of the preceding ones, further characterised in that the cooling channels (9) are provided with a thread at their lower ends, into which threaded valves or suchlike may be screwed.

5. System according to claim 1 or any of the preceding ones, further characterised in that the cooling channels (9) extend into an annular groove (19), which connect with clearances between the ribs (16) of the mouth portion of the mould (15).

## Revendications

1. Dispositif pour le refroidisement des moules de prémoulage d'une machine IS ou RIS, dans lequel les segments de moules (2) sont munis de canaux de refroidissement axiaux (9) qui servent à guider un milieu de refroidissement, de préférence de l'air, et qui débouchent à leurs extrémités supérieures dans des canaux distributeurs horizontaux (10) où les canaux (10) de chaque segments de moule (2) sont en communication avec un canal d'alimentation (13) et chaque segment de moule (2) présente une ouverture d'entrée (8) à laquelle est associée une ouverture de sortie d'un canal de raccordement (7) d'un support (20) du segment de moule (2) qui est relié, par l'intermédiaire d'un canal (6) ménagé dans le support (20), à l'articulation de la cuvette support de segment de moule (5), laquelle est raccordée par des canaux (4) ménagés dans le mécanisme moteur (14) servant à ouvrir et fermer les segments de moules (2), à un canal d'arrivée situé dans l'axe de rotation principal (3) de ce canal avec un tronçon de tube (22) soumis à l'action d'un ressort (21) se trouvant dans le canal de raccordement (7), et où les canaux distributeurs (10) sont disposés dans les segments de moules (2), en ce qui concerne leur niveau, de telle manière que les fonds (17) des paraisons (18) moulées dans l'outillage de moulage se trouvent nettement au-dessus des canaux horizontaux (10).

2. Dispositif selon la revendication 1, caractérisée en ce que les canaux distributeurs et d'alimentation (10, 13) sont constitués par des perçages qui sont fermés à l'une de leurs extrémités pax des vis (11).

3. Dispositif selon la revendication 1 ou la revendication 2, caractérisé en ce que les canaux de refroidissement (9) sont disposés dans des plans qui sont légèrement inclinés par rapport à l'axe longitudinal du moule.

4. Dispositif selon la revendication 1 ou l'une des revendications précédentes, caractérisé en ce que les canaux de refroidissement (9) sont munis, à leurs extrémités inférieures, de filetage dans lesquels on peut visser des clapets taraudés ou analogues.

5. Dispositif selon la revendication 1 ou l'une des revendications précédentes, caractérisé en ce que les canaux de refroidissement (9) débouchent dans une gorge annulaire (19) qui est en communication avec des intervalles situés entre les nervures (16) de l'élément (15) de moulage du goulot.

Fig.1

Fig. 2